# EUROPEAN PATENT APPLICATION

(11) **EP 4 822 569 A1**
(43) Date of publication of application: **14.10.2026**
(21) Application number: 25169461.8
(22) Date of filing: 09.04.2025
(51) Int. Cl.: G06F 21/57

(54) **COMPUTER-IMPLEMENTED METHOD TO PERFORM A REMOTE ATTESTATION COMMUNICATION BETWEEN A VERIFIER DEVICE AND A PROVER DEVICE**

(71) Applicant: ABB SCHWEIZ AG, 5400 Baden (CH)
(72) Inventor: FINSTER, Soeren, 76139 Karlsruhe (DE); KOHNHAEUSER, Florian, 64560 Riedstadt (DE); COPPIK, Nicolas, 68165 Mannheim (DE); GOETTEL, Christian, 5442 Fislisbach (CH)
(74) Representative: Maiwald GmbH

(57) **Abstract**

The present invention relates to a computer-implemented method (100) to perform a remote attestation communication between a verifier device (1) and a prover device (2), wherein the prover device (2) and the verifier device (1) communicate with each other in an asymmetric manner, comprising the steps:
- collecting (102), by the verifier device (1), first information (3) about the prover device (2);
- selecting (104), by the verifier device (1), of an attestation protocol (4) between the verifier device (1) and the prover device (2) on basis of collected first information (3);
- generating (106), by the verifier device (1), an attestation request message (5) on basis of the selected prover-specific attestation protocol (4);
- transmitting (108), by the verifier device (1), of the generated attestation request message (5) to the prover device (2);
- calculating (110), by the prover device (2), an attestation response message (6) according to the selected attestation protocol (4) on basis of the received attestation request message (5);
- transmitting (112), by the prover device (2), the attestation response message (6) to the verifier device (1).
- verifying (114), by the verifier device (1), the receiving attestation response (6); and
- providing (116), by the verifier device (1), a result information (7) on basis of the verified attestation response (6).

## Description

### FIELD OF THE INVENTION

The present invention relates to computer-implemented method to perform a remote attestation communication between a verifier device and a prover device.

### BACKGROUND OF THE INVENTION

Remote attestation performs an interactive cryptographic protocol between two entities: the verifier device and the prover device to attest the integrity of the prover device. The verifier device provides the prover device with a nonce of sufficient entropy during its request for attestation. Using this nonce, the prover device constructs a reply that includes a description of its current state, a log of how this state was reached, and cryptographic proof (using the nonce) that guarantees integrity, authenticity and timeliness.

Since this attestation protocol is usually performed via capable communication channels, e.g., ethernet, cellular or Wi-Fi, no special measures are taken to reduce the amount of transmitted data.

This transmitted data includes the transfer of a high-entropy nonce, i.e., random and extremely unlikely to be reused, from the verifier device to the prover device and the transfer of a measurement log from the prover device to the verifier device.

Therefore, for devices that do not offer capable communication channels, attestation is often not possible. This includes devices that are intentionally air-gapped for security reasons, not connected to larger communication infrastructure by design, or do not have the necessary communication hardware, e.g., legacy or low-cost devices.

Therefore, there is a need to address these issues.

### SUMMARY OF THE INVENTION

Therefore, it would be advantageous to provide an concept for an improved remote attestation communication between a verifier device and a prover device.

The object of the present invention is solved by the subject matter of the independent claims, wherein further embodiments are incorporated in the dependent claims.

In a first aspect of the present invention, there is provided a computer-implemented method to perform a remote attestation communication between a verifier device and a prover device, wherein the prover device and the verifier device communicate with each other in an asymmetric manner, comprising the steps:
- collecting, by the verifier device, first information about the prover device;
- selecting, by the verifier device, of an attestation protocol between the verifier device and the prover device on basis of collected first information;
- generating, by the verifier device, an attestation request message on basis of the selected prover-specific attestation protocol;
- transmitting, by the verifier device, of the generated attestation request message to the prover device;
- calculating, by the prover device, an attestation response message according to the selected attestation protocol on basis of the received attestation request message;
- transmitting, by the prover device, the attestation response message to the verifier device.
- verifying, by the verifier device, the receiving attestation response; and
- providing, by the verifier device, a result information on basis of the verified attestation response.

In other words, an important aspect of the present invention in an general manner is that attestation is performed over extremely constrained communication channels like a recording of an LED, a speaker using a smartphone camera/microphone of the verifier device and a human input with limited controls of an industrial HMI, i.e., a very limited set of buttons on the prover device. This enables attestation for devices that are air-gapped, i.e. not connected to communicate, on purpose for security reasons or not designed for communication.

Further, the present invention allows to adjust an attestation protocol in an efficient manner and executing it over asymmetric and constrained communication channels.

Further, the present invention allows usage of reduced-entropy nonces and compressed attestation reports. This enables attestation through very slow channels, e.g. human entered, over creatively used physical interfaces.

Therefore, attestation is enabled between a verifier device that uses a different communication channel to communicate with the prover device when inputting information to the prover device and another communication channel when receiving information by the prover device. The communication channel or communication capability which the prover device is able to offer is usually constraint compared to the communication channel or communication capability of the verifier device. Nevertheless, attestation between these two devices using different communication channels and/or have different communication capabilities is enabled due to the present invention

This is achieved by following technical aspects as possible parts of the technical solution of the present invention:
This invention uses severely constrained communication channels to perform remote attestation for devices that are disconnected (air-gapped) or do not have modern communication capabilities (legacy devices).

To achieve this, the invention relaxes security properties of the attestation protocol (i.e., the nonce length) and creatively uses the hardware of the disconnected or legacy devices to establish a communication channel with enough capacity to perform the modified attestation protocol.

It also considers that the constrained communication channels are asymmetric with regard to capacity: while communication from the constrained prover to the less constrained verifier (e.g., a smartphone) can leverage the capabilities of the verifier, the other way stays extremely limited by the prover's capabilities. By using this highly space-efficient attestation protocol, remote attestation is possible in an advantageous manner for these classes of devices. Further, the present invention enables easy attestation via software upgrades for the corresponding (legacy) devices.

According to an example, the communication between the prover device and the verifier device in an asymmetric manner means that the verifier device is configured to communicate with the prover device in a first communication manner and the prover device is configured to communicate with the verifier device in a second communication manner, wherein the first communication manner is different from the second communication manner and / or that the prover device and the verifier device are configured to communicate with each other by using different or heterogeneous communication technologies. In this way, an improved and efficient attestation between the verifier device and the prover device is ensured.

According to an example, the step of collecting the first information comprises at least one of the following: accessing a database, scanning a QR-code based information label at the prover device, hand-based information entry into the verifier device. In this way, a prover-adapted or prover-specific attestation is ensured.

According to an example, the first information includes at least one of the following: a type information of the prover device, a communication capability of the prover device. In this way, a prover-adapted or prover-specific attestation is ensured.

According to an example, a specification of the attestation protocol comprises at least one of the following prover-specific characteristics: a definition of a nonce information, a selection or priorization of at least one communication channel according to a communication capability, communication method and communication speed. In this way, an improved and efficient attestation between the verifier device and the prover device is ensured.

According to an example, the step of selecting the prover-specific attestation protocol includes a dynamic adjustment of the attestation protocol based on a selected device-specific communication capability of the prover device and / or the verifier device to transfer data between the verifier device and the prover device in an efficient manner. In this way, an improved and efficient attestation between the verifier device and the prover device is ensured.

According to an example, the selected device-specific communication manner includes a selection of at least one common communication manner between the prover device and the verifier device. In this way, an improved and efficient attestation between the verifier device and the prover device is ensured.

According to an example, the selection of the prover-specific attestation protocol, by the verifier device, is based on an adjusted attestation-protocol-variant that the prover device is able to process based on the communication capability of the prover device. In this way, an improved and efficient attestation between the verifier device and the prover device is ensured.

According to an example, the attestation request message includes at least a prover-specific nonce information. In this way, an improved and efficient attestation between the verifier device and the prover device is ensured.

According to an example, the step of transmitting the calculated attestation response from the prover device to the verifier device is performed on a communication channel that is either a same communication channel or a different communication channel on which the prover device received the attestation request message sent by the verifier device. In this way, an improved and efficient attestation between the verifier device and the prover device is ensured.

According to an example, the verifier device 1 is a computer-based device and the prover device 2 is a technical component of a technical system. In this way, flexibility of conducting the attestation between the prover device and the verifier device is improved.

In a second aspect of the present invention, a data processing device is provided comprising means for carrying out the method of any one of the previous examples.

In a third aspect of the present invention, a computer program is provided comprising instructions which, when the program is executed by a computer, cause the computer to carry out the steps of the method of any one of the previous examples.

In a fourth of the present invention, a computer-readable medium is provided comprising instructions which, when executed by a computer, cause the computer to carry out the method according to any one of the previous examples.

### BRIEF DESCRIPTION OF THE DRAWINGS

Exemplary embodiments will be described in the following with reference to the following drawing:

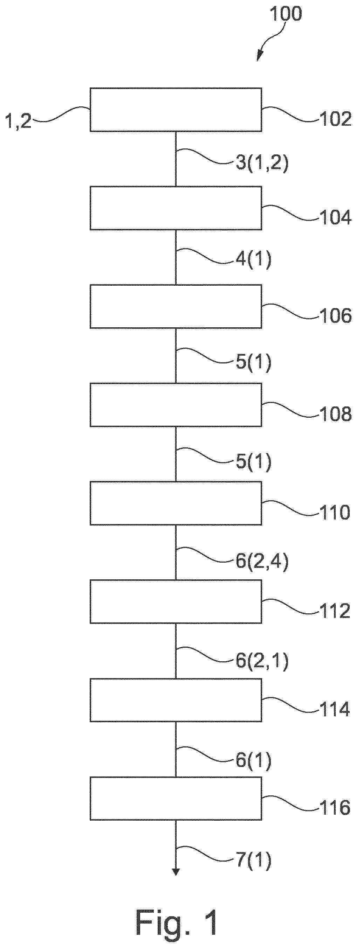

Fig. 1 illustrates a schematic computer-implemented method to perform a remote attestation communication between a verifier device and a prover device according to an embodiment of the present invention.

### DETAILED DESCRIPTION OF THE DRAWINGS

Fig. 1 illustrates a schematic computer-implemented method 100 to perform a remote attestation communication between a verifier device 1 and a prover device 2, wherein the prover device 2 and the verifier device 1 communicate with each other in an asymmetric manner, comprising the steps:

In a first step 102, collecting, by the verifier device 1, first information 3 about the prover device 2 is performed.

Optionally, the first information 3 includes at least one of the following: a type information of the prover device 2, a communication capability of the prover device 2.

Optionally, the step 102 of collecting the first information 3 comprises at least one of the following: accessing a database, scanning a QR-code based information label at the prover device 2, hand-based information entry into the verifier device 1.

In a second step 104, selecting, by the verifier device 1, of an attestation protocol 4 between the verifier device 1 and the prover device 2 on basis of collected first information 3 is performed.

Optionally, the step 104 of selecting the prover-specific attestation protocol 4 includes a dynamic adjustment of the attestation protocol 4 based on a selected device-specific communication capability of the prover device 2 and / or the verifier device 1 to transfer data between the verifier device 1 and the prover device 2 in an efficient manner.

In a third step 106, generating, by the verifier device 1, an attestation request message 5 on basis of the selected prover-specific attestation protocol 4 is performed.

In a fourth step 108, transmitting, by the verifier device 1, of the generated attestation request message 5 to the prover device 2 is performed.

In a fifth step 110, calculating, by the prover device 2, an attestation response message 6 according to the selected attestation protocol 4 on basis of the received attestation request message 5 is performed.

In a sixth step 112, transmitting, by the prover device 2, the attestation response message 6 to the verifier device 1 is performed.

Optionally, the step 112 of transmitting the calculated attestation response 6 from the prover device 2 to the verifier device 1 is performed on a communication channel that is either a same communication channel or a different communication channel on which the prover device 2 received the attestation request message 5 sent by the verifier device 1.

In a seventh step 114, verifying, by the verifier device 1, the receiving attestation response 6 is performed.

In an eighth step 116, providing, by the verifier device 1, a result information 7 on basis of the verified attestation response 6 is performed.

Optionally, the communication between the prover device 2 and the verifier device 1 in an asymmetric manner means that the verifier device 1 is configured to communicate with the prover device 2 in a first communication manner and the prover device 2 is configured to communicate with the verifier device 1 in a second communication manner, wherein the first communication manner is different from the second communication manner and / or that the prover device 2 and the verifier device 1 are configured to communicate with each other by using different or heterogeneous communication technologies.

In order to explain how a first communication manner of the verifier device 1 and the second communication manner of the prover device 2 may be understood according to the present invention, the following example is provided:
The verifier device may be a smartphone or a portable computer device that may have one of the following such as a camera, a microphone and/or a virtual keypad to input information into the computer device in at least one manner by a user. The prover device may have only a simple keypad for input information and/or commands by a user and / or a display, e.g. LED, LCD or other suitable types of displays, to output information in a defined manner.

Therefore, from the example it appears evident what is meant when the first communication manner is different from the second communication manner and / or that the prover device 2 and the verifier device 1 are configured to communicate with each other by using different or heterogeneous communication technologies:
After inputting an information or a command via a keypad or other technology that is provided by the prover device 2 and that tells the prover device 2 what kind of information the prover device 2 should output, the prover device 2 outputs a relevant information to the verifier device 1 by signaling the relevant processed information via an LED or LCD device which may have a display (= first communication channel of the prover device 2) and the prover device 2 receives this outputted information by using a camera or another means (= second communication channel of the verifier device 1 may be different from the first communication channel and that uses a different or a heterogenious communication technology than the prover device 2) that can interprete and process the outputted LED or LCD signals by the prover device 2.

Further, the present invention allows to enter entropy-reduced nonce into attester device (= prover device 2) by for example using buttons, HMI inputs (e.g. 3 seconds), LEDs functioning as sensors.

Optionally, a specification of the attestation protocol 4 comprises at least one of the following prover-specific characteristics: a definition of a nonce information, wherein the definition of the nonce information may contain for example a length information of the nonce, a possibility of enconding of the nonce, a selection or priorization of at least one communication channel according to a communication capability, communication method and communication speed.

Optionally, the selected device-specific communication manner includes a selection of at least one common communication manner between the prover device 2 and the verifier device 1.

Optionally, the selection of the prover-specific attestation protocol 4, by the verifier device 1, is based on an adjusted attestation-protocol-variant that the prover device 2 is able to process based on the communication capability of the prover device 2.

Optionally, the attestation request message 5 includes at least a prover-specific nonce information.

Optionally, the verifier device 1 is a computer-based device, e.g. a portable computing device such as a smartphone, and the prover device 2 is a technical component of a technical system, e.g. an industrial embedded device, a field device such as a sensor device like a temperature sensor.

In the following, further aspects of the present invention in form of a further example are presented:
An exemplary execution of the attestation protocol in which an engineer is attesting a device without modern communication features, i.e., a few buttons for user input and an LCD multi-segment display, could be as follows:
The engineer takes a smartphone (= verifier device 1) physically close to the device and initiates the attestation procedure in an app. The app fetches necessary information about the prover device 2, e.g., communication technologies, attestation protocol, whitelists, to be attested over Wi-Fi or cellular from a backend service such a database. The information from the backend service includes a detailed description of the procedure that is appropriate for the device (e.g.., nonce length, transfer method and speed, encodings, full specification of the attestation protocol).

The engineer is then instructed from the app to start attestation mode on the prover device by navigating the HMI. When attestation mode is started, the prover device expects a series of button presses that will form the nonce needed for the attestation protocol. Due to the number of physically present buttons of the prover device, a nonce with sufficient entropy needs (in this example) 12 button presses. The engineer is instructed from the app to press the corresponding buttons on the HMI of the prover device.

Afterwards the prover device calculates the attestation response and encodes the information in a quick succession of updates to the LCD or LED display of the prover device. The engineer points the smartphone camera of the verifier device to the LCD display of the prover device and the app of the verifier device records the fast-flashing information in order to decode it.

The app (= application) of the verifier device then notifies the engineer or user about the successful attestation. Afterwards, the engineer confirms the transfer to the prover device with a button press. The prover device then stops the information transfer and enters a normal operation again. The smartphone app may then transfer the received and processed information to the backend service.

In this example, the prover device has no advanced features at all and therefore, this method can be implemented on a wide range of existing devices with constraint communication capability.

If more advanced features are available, the data transfer can be made easier for the engineer, for example by transferring the nonce via other or further communication channels such as sound or light, if the verifiver device is capable of sensing such signals.

### Reference signs

- 1: Verifier device
- 2: Prover device
- 3: First information
- 4: Attestation protocol
- 5: Attestation request message
- 6: Attestation response message
- 7: Result information

- 100: Computer-implemented method
- 102: Collecting
- 104: Selecting
- 106: Generating
- 108: Transmitting
- 110: Calculating
- 112: Transmitting
- 114: Verifying
- 116: Providing

## Claims

1. Computer-implemented method (100) to perform a remote attestation communication between a verifier device (1) and a prover device (2), wherein the prover device (2) and the verifier device (1) communicate with each other in an asymmetric manner, comprising the steps:
- collecting (102), by the verifier device (1), first information (3) about the prover device (2);
- selecting (104), by the verifier device (1), of an attestation protocol (4) between the verifier device (1) and the prover device (2) on basis of collected first information (3);
- generating (106), by the verifier device (1), an attestation request message (5) on basis of the selected prover-specific attestation protocol (4);
- transmitting (108), by the verifier device (1), of the generated attestation request message (5) to the prover device (2);
- calculating (110), by the prover device (2), an attestation response message (6) according to the selected attestation protocol (4) on basis of the received attestation request message (5);
- transmitting (112), by the prover device (2), the attestation response message (6) to the verifier device (1).
- verifying (114), by the verifier device (1), the receiving attestation response (6); and
- providing (116), by the verifier device (1), a result information (7) on basis of the verified attestation response (6).

2. Computer-implemented method (100) according to claim 1, wherein the communication between the prover device (2) and the verifier device (1) in an asymmetric manner means that the verifier device (1) is configured to communicate with the prover device (2) in a first communication manner and the prover device (2) is configured to communicate with the verifier device (1) in a second communication manner, wherein the first communication manner is different from the second communication manner and / or that the prover device (2) and the verifier device (1) are configured to communicate with each other by using different or heterogeneous communication technologies.

3. Computer-implemented method (100) according to one of the previous claims, wherein the step (102) of collecting the first information (3) comprises at least one of the following: accessing a database, scanning a QR-code based information label at the prover device (2), hand-based information entry into the verifier device (1).

4. Computer-implemented method (100) according to one of the previous claims, wherein the first information (3) includes at least one of the following: a type information of the prover device (2), a communication capability of the prover device (2).

5. Computer-implemented method (100) according to one of the previous claims, wherein a specification of the attestation protocol (4) comprises at least one of the following prover-specific characteristics: a definition of a nonce information, a selection or priorization of at least one communication channel according to a communication capability, communication method and communication speed.

6. Computer-implemented method (100) according to one of the previous claims, wherein the step (104) of selecting the prover-specific attestation protocol (4) includes a dynamic adjustment of the attestation protocol (4) based on a selected device-specific communication capability of the prover device (2) and / or the verifier device (1) to transfer data between the verifier device (1) and the prover device (2) in an efficient manner.

7. Computer-implemented method (100) according to claim 5, wherein the selected device-specific communication manner includes a selection of at least one common communication manner between the prover device (2) and the verifier device (1).

8. Computer-implemented method (100) according to claim 5, wherein the selection of the prover-specific attestation protocol (4), by the verifier device (1), is based on an adjusted attestation-protocol-variant that the prover device (2) is able to process based on the communication capability of the prover device (2).

9. Computer-implemented method (100) according to one of the previous claims, wherein the attestation request message (5) includes at least a prover-specific nonce information.

10. Computer-implemented method (100) according to one of the previous claims, wherein the step (112) of transmitting the calculated attestation response (6) from the prover device (2) to the verifier device (1) is performed on a communication channel that is either a same communication channel or a different communication channel on which the prover device (2) received the attestation request message (5) sent by the verifier device (1).

11. Computer-implemented method (100) according to one of the previous claims, wherein the verifier device (1) is a computer-based device and the prover device (2) is a technical component of a technical system.

12. A data processing device comprising means for carrying out the method of any one of the claims 1 to 11.

13. A computer program comprising instructions which, when the program is executed by a computer, cause the computer to carry out the steps of the method of any one of the claims 1 to 11.

14. A computer-readable medium comprising instructions which, when executed by a computer, cause the computer to carry out the method according to any one of the claims 1 to 11.
